# EUROPÄISCHE PATENTSCHRIFT

(11) **EP 3 727 934 B1**
(45) Veröffentlichungstag und Bekanntmachung des Hinweises auf die Patenterteilung: **16.02.2022**
(21) Anmeldenummer: 18827007.8
(22) Anmeldetag: 13.12.2018
(51) Int. Cl.: B60Q 1/26, B60R 1/12

(54) **LEUCHTE SOWIE RÜCKBLICKVORRICHTUNG UND KRAFTFAHRZEUG MIT LEUCHTE**
LUMINAIRE, REAR VIEW DEVICE, AND MOTOR VEHICLE HAVING LUMINAIRE
LAMPE AINSI QUE DISPOSITIF RÉTROVISEUR ET VÉHICULE AUTOMOBILE MUNI D'UNE LAMPE

(30) Priorität: 18.12.2017 DE 102017130347
(43) Veröffentlichungstag der Anmeldung: 28.10.2020
(73) Patentinhaber: Motherson Innovations Company Ltd., London EC3A 6AP (GB)
(72) Erfinder: SCHMIDT, Oliver, 70327 Stuttgart (DE)
(74) Vertreter: Weber-Bruls, Dorothée
(86) Internationale Anmeldenummer: PCT/EP2018/084822
(87) Internationale Veröffentlichungsnummer: WO 2019/121339

(56) Entgegenhaltungen:
- EP-A1- 1 652 727
- WO-A1-00/06944
- US-A1- 2005 201 113
- US-A1- 2006 012 990

## Beschreibung

Die Erfindung betrifft eine Leuchte für eine Rückblickvorrichtung eines Kraftfahrzeugs, insbesondere für eine Außenrückblickvorrichtung eines Kraftfahrzeugs, nach dem Oberbegriff von Anspruch 1 sowie eine Rückblickvorrichtung und ein Kraftfahrzeug jeweils mit einer derartigen Leuchte.

Eine Rückblickvorrichtung für ein Kraftfahrzeug liefert ein mindestens den gesetzlichen Vorschriften entsprechendes Bild des hinteren Bereiches des Kraftfahrzeugs und gehört zu einer Untergruppe von Vorrichtungen für eine indirekte Sicht. Diese liefern Bilder und Ansichten von Objekten, die sich nicht im direkten Sichtfeld eines Fahrers befinden, das heißt in Richtungen entgegengesetzt, links, rechts, unterhalb und/oder oberhalb der Blickrichtung des Fahrers. Der Blick des Fahrers kann insbesondere auch in Blickrichtung nicht vollständig zufriedenstellend sein, zum Beispiel können sich Sichtbehinderungen durch Fahrzeugteile des eigenen Fahrzeuges, wie zum Beispiel durch Teile der Karosserie, insbesondere der A-Säule, der Dachkonstruktion und/oder der Motorhaube, und Sichtbehinderungen durch andere Fahrzeuge und/oder Gegenstände außerhalb des Fahrzeugs ergeben, die die Sicht derart behindern können, dass der Fahrer eine Fahrsituation nicht vollständig zufriedenstellend bzw. nur unvollständig erfassen kann. Außerdem ist es möglich, dass der Fahrer nicht in der Lage ist, die sich ihm in oder abseits der Blickrichtung präsente Situation so zu erfassen, wie es nötig wäre, um das Fahrzeug der Situation entsprechend zu kontrollieren. Daher kann eine Rückblickvorrichtung auch derart ausgestaltet sein, dass sie die Informationen entsprechend den Fähigkeiten des Fahrers aufbereitet, um ihm eine bestmögliche Erfassung der Situation zu ermöglichen.

Verschiedene Funktionen und Geräte können in Rückblickvorrichtungen eingebaut und/oder mit Hilfe von Rückblickvorrichtungen gesteuert werden, wobei insbesondere auch Kameras umfasst sind. Besonders nützlich sind Funktionen und Geräte zur Verbesserung, Erweiterung und/oder Aufrechterhaltung der Funktionalität der Rückblickvorrichtung bei normalen oder extremen Bedingungen. Hierbei können Heiz- und/oder Kühleinrichtungen, Reinigungsmittel wie Wischer, flüssige und/oder gasförmige Sprays, Aktuatormittel zum Bewegen der Rückblickvorrichtung oder Teile davon, wie beispielsweise eine Anzeige, ein Kamerasystem und/oder Teile von einem Kamerasystem, umfassend beispielsweise Linsen, Filter, Lichtquellen, adaptive Optiken wie zum Beispiel verformbare Spiegel, Sensoren und/oder Spiegel, und /oder Aktuatormittel zur Induktion von Bewegungen von anderen Objekten, beispielsweise Teile des Fahrzeugs und/oder Gegenstände, die das Fahrzeug umgeben, umfasst sein.

Weiterhin kann die Rückblickvorrichtung lineare Führungen und/oder rotierende Räder, wie beispielsweise ein Filterrad, zum Austauschen optischer Elemente, beispielsweise umfassend Linsen, Spiegel, Lichtquellen, Sensoren, adaptive Optiken wie verformbaren Spiegeln und/oder Filter, umfassen.

In Rückblickvorrichtungen können weitere Einrichtungen integriert sein, und/oder es können weitere Einrichtungen mit Hilfe von Rückblickvorrichtungen gesteuert werden, wie zum Beispiel jede Art von Lichtmodul, umfassend ein externes Lichtmodul, ein internes Lichtmodul, ein Frontlicht, ein Rücklicht, ein Nebelscheinwerfer, ein Bremslicht, ein Beschleunigungslicht, ein Blinklicht, ein Logolicht, eine Vorfeldbeleuchtung, ein Bodenlicht, ein Pfützenlicht, ein Blitzlicht, ein Navigationslicht, ein Positionslicht, ein Notlicht, ein Scheinwerfer, ein grünes Licht, ein rotes Licht, ein Warnlicht, ein Blinklicht-Lichtmodul, ein Annäherungslicht, ein Suchlicht, ein Informationslicht, eine Anzeige und/oder dergleichen. Weitere Beispiele für Funktionen und Vorrichtungen, die in Rückblickvorrichtungen integriert und/oder mit Hilfe von Rückblickvorrichtungen gesteuert werden, können beispielsweise ein Müdigkeits-Erkennungssystem, ein Sekundenschlaf-Erkennungssystem, ein Abstands- und/oder Geschwindigkeitsbestimmungssystem, beispielsweise ein LIDAR (Lichtdetektion und Abstandserfassung) System, ein Toter-Winkel-Indikationssystem, ein SpurwechselAssistenzsystem, ein Navigationsassistenzsystem, ein Tracking-Assistent-System, ein Mensch-Maschine-Interaktionssystem, ein Maschinen-Maschinen-Interaktionssystem, ein Not- und Vorsichtsmaßnahmen-Assistenzsystem, wie ein Unfallvermeidungs-Assistenzsystem, ein Gegenmaßnahmen-Assistenzsystem, ein Bremsassistenzsystem, ein Lenkassistenzsystem, ein Beschleunigungsassistenzsystem, ein Fluchtassistenzsystem, das beispielsweise ein Schleudersitzsystem umfasst, ein Richtungsanzeiger, ein Toter-Winkel-Indikator, ein Annäherungssystem, ein Notbremssystem, eine Ladestatusanzeige, ein Fahrzeugmodus System, das beispielsweise ein Sport-Modus System, ein Economy-Modus System, ein Autonomes-Fahr-Modus System, ein Schlaf-Modus System und/oder ein Anti-Diebstahl-System umfasst, ein Fahrzeug-Verschlossen Indikationssystem, eine Fahrzeug-Gestohlen Anzeige, ein Warnsignal-System, ein Temperatur-Indikator-System, eine Wetterindikationssystem, ein Ampel-Signalsystem, ein Kraftstoff-Statussystem und/oder beliebige Kombination davon umfassen.

Beleuchtungseinrichtungen für Rückblickvorrichtungen und/oder Lichtleiter dazu sind in der deutschen Patentanmeldung Nr. 102012108488, in der deutschen Patentanmeldung Nr. 102012104529, in der deutschen Patentanmeldung Nr. 102012107833, in der deutschen Patentanmeldung Nr. 102012107834, in dem europäischen Patent Nr. 2738043, in dem europäischen Patent Nr. 2947378, in der internationalen Patentanmeldung Nr. 2015/173695, in der europäischen Patentanmeldung Nr. 3045944, in der US-Patentanmeldung Nr. 15 / 228,566, in der US-Patentanmeldung Nr. 15 / 000,733, in der internationalen Patentanmeldung Nr. 2016/147154, in der US-Patentanmeldung Nr. 15 / 256,532, in der deutschen Patentanmeldung Nr. 102015115555, in der europäischen Patentanmeldung Nr. 3144183, der Anmelderin beschrieben.

Ein Kameramodul kann insbesondere eine Vielzahl von verschiedenen optischen Elementen, die unter anderem eine Vielzahl von verschiedenen Sensoren und Lichtquellen umfasst, sowie Gehäuseteilen aufweisen. Das Gehäuse eines Kameramoduls kann aus Kunststoff, Metall, Glas, einem anderen geeigneten Material und/oder aus einer beliebigen Kombination davon hergestellt sein und kann in Kombination mit den unten beschriebenen Techniken zum Ändern oder Modifizieren der Eigenschaften des Materials oder der Materialoberfläche verwendet werden. Gehäuse sind beispielsweise in der deutschen Patentanmeldung Nr. 102016108247.3 offenbart.

Die Kamera kann beispielsweise CCD- oder CMOS- oder Lichtfeldsensoren umfassen, wie sie beispielsweise in der deutschen Patentanmeldung Nr. 102011053999 und dem US-Patent Nr. 6,703,925 beschrieben sind. Auch kann ein Bereich des Sensors für verschiedene Zwecke reserviert werden, um beispielsweise einen Teststrahl zu detektieren, wie in dem US-Patent Nr. 8,031,224 offenbart.

Die optischen Elemente können aus irgendeiner Art von Glas oder irgendeinem anderen geeigneten Material geformt oder gestaltet sein. Glas wird hier im Sinne eines nichtkristallinen amorphen Festkörpers verwendet, der einen Glasübergang zeigt, wenn er in Richtung des flüssigen Zustandes erhitzt wird. Es umfasst beispielsweise die Gruppe der Polymergläser, Metallgläser, Siliciumdioxid-Gläser, aber auch jedes andere geeignete Material, das den Glasübergang zeigt, kann ebenfalls verwendet werden. Das Glas kann entweder flach, keilförmig, rechteckig, zylindrisch, sphärisch, konisch, elliptisch und/oder kreisförmig sein, wie es beispielsweise in der deutschen Patentanmeldung Nr. 102016108247.3 und der deutschen Patentanmeldung Nr. 102011103200 beschrieben ist, oder eine Form nach den unterschiedlichen Bedürfnissen oder Linsen-Typen haben. Als nicht einschränkende Beispiele können Kameramodule mit Linsen ausgerüstet werden, wie beispielsweise eine Weitwinkel- oder Fischaugenlinse, die geeignet ist, Peripheriebilder bereitzustellen, wie in der US-Patentanmeldung Nr. 15 / 281,780 und der US-Patentanmeldung Nr. 13 / 090,127 beschrieben, eine Fresnel-Linse oder Mikrolinsen, wie in der deutschen Patentanmeldung Nr. 102011053999 beschrieben, oder eine TIR-Linse (Total interne Reflexionslinse), wie in dem US-Patent Nr. 8,740,427 beschrieben. Die deutsche Patentanmeldung Nr. 10201610109159 beschreibt zum Beispiel eine Linse, umfassend zumindest eine erste Grenzfläche, die als eine brechende Eintrittsfläche für zumindest einen Lichtstrahl fungiert, zumindest eine zweite Grenzfläche, die als eine totalreflektierende innere Fläche, TIR-Fläche, für den durch die erste Grenzfläche in die Linse eintretenden Lichtstrahl fungiert, und zumindest eine dritte Grenzfläche, die als eine brechende Austrittsfläche für den an der zweiten Grenzfläche reflektierten Lichtstrahl fungiert, wobei die zweite Grenzfläche und die dritte Grenzfläche so geformt sind, dass zumindest zwei Lichtstrahlen, die einen divergierenden Winkel zueinander aufweisen und unter einem beliebigen Raumwinkel auf die erste Grenzfläche auftreffen, aus der Linse im Bereich der dritten Grenzfläche im Wesentlichen parallel zueinander und in einer gemeinsamen Raumrichtung austreten, wobei die dritte Grenzfläche so geformt ist, dass sie zumindest bereichsweise einen Normalvektor aufweist, der zur Raumrichtung weder parallel noch antiparallel ist, und die zumindest zwei Lichtstrahlen im Wesentlichen nicht-parallel zueinander sind, bis sie aus der dritten Fläche austreten, sowie auf ein Verfahren zur Herstellung einer Linse.

Eine andere Art von optischen Elementen, die bekanntermaßen in Kameramodulen verwendet werden, sind optische Fasern, insbesondere in Form von Faserbündeln und vorzugsweise in Form von Faserbündeln mit einem optischen Kopf, wie beispielsweise in der US-Patentanmeldung Nr. 09 / 771,140 beschrieben. Es können verschiedene Verfahren verwendet werden, um solche optischen Elemente herzustellen, wie beispielsweise das Verfahren, das in dem US-Patent 8,460,060 beschrieben wird. Die optischen Elemente können transparent sein, wie beispielsweise in dem US-Patent Nr. 8,031,224, der deutschen Patentanmeldung Nr. 102016108247.3 und der US-Patentanmeldung Nr. 13 / 242,829 beschrieben. Aber die optischen Elemente können auch semitransparent sein, wie in der US-Patentanmeldung Nr. 09 / 771,140 und der US-Patentanmeldung Nr. 13 / 090,127 beschrieben. Weiterhin können die optischen Elemente vollständig oder teilweise mit unterschiedlichen Arten von Beschichtungen beschichtet werden, um unterschiedliche Effekte zu realisieren, wie beispielsweise Antireflexionsbeschichtungen, siehe das US-Patent Nr. 8,031,224, Reflexionsbeschichtungen auf Chrombasis, siehe das US-Patent Nr. 9,181,616, und andere Beschichtungen, wie beispielsweise für polymerische Substrate in der US-Patentanmeldung Nr. 14 / 936,024 und in US-Patentanmeldung Nr. 15 / 124,310 beschrieben. Vorzugsweise bestehen die optischen Elemente aus einem kratzfesten Material, wie es beispielsweise in der deutschen Patentanmeldung Nr. 102016108247.3 beschrieben ist. Die optischen Elemente können an bestimmten Stellen der optischen Elemente Auskopplungsstrukturen aufweisen, und ein optischer Film, beispielsweise ein Extrusionsfilm, und eine geformte Beschichtung kann, wie in der deutschen Patentanmeldung Nr. 102011103200 beschrieben, aufgebracht werden. Eine Beschichtung zur Spektral- und Spannungskontrolle ist in der US-Patentanmeldung Nr. 15 / 124,310 beschrieben. Verschiedene Filter können in die optischen Elemente integriert werden, wie beispielsweise Graufilter oder Polarisationsfilter, die in der US-Patentanmeldung Nr. 14 / 809,509 beschrieben sind. Elektrochrome Substrate, Polymerelektrolyte und andere ladungsleitende Medien können für die optischen Elemente auf der Grundlage der Beschreibungen umfasst sein, wie in der europäischen Patentanmeldung Nr. 08103179.1, dem Europäisches Patent Nr. 2202826, dem US-Patent Nr. 7,999,992 und dem US Patent Nr. 8,537,451 offenbart.

Das Kameramodul kann auch mit Geräten zur Lichtintensitätsregulierung ausgestattet sein, wie beispielsweise in der US-Patent Anmeldung Nr. 14 / 809,509 beschrieben und Lichtpegelverstärkeröhren, wie in US Patentanmeldung Nr. 09 / 771,140 beschrieben, aufweisen. Die elektrochromen Substrate und Vorrichtungen, die in der europäischen Patentanmeldung Nr. 08103179.1, dem europäischen Patent Nr. 2202826, dem US-Patent Nr. 7,999,992 und dem US-Patent Nr. 8,537,451 verwendet werden, können auch für diesen Zweck verwendet werden, genauso wie ein Transflektor zum Transmittieren oder Reflektieren von Licht auf der Grundlage eines entsprechenden Eingangssignals, wie in der deutschen Patentanmeldung Nr. 102016106126.3 beschrieben.

Das Kameramodul oder eine an das Kameramodul angepasste Abdeckung kann mit verschiedenen Aktuatoren, Antrieben und/oder einer flexiblen Bahn bewegt werden, wie beispielsweise in der deutschen Anmeldung Nr. 102016108247.3 und der US-Patentanmeldung Nr. 15 / 281,780 beschrieben. Weiterhin kann das Kameramodul auch Reinigungselemente umfassen, um das nach außen zeigende und der Umwelt ausgesetzte optische Element zu reinigen. Das Reinigungselement kann beispielsweise Wischer, Bürsten, Lippen, Düsen, Ventilatoren und ähnliche Elemente enthalten, wie sie in der europäischen Patentanmeldung Nr. 14165197.6, der US-Patentanmeldung Nr. 15 / 281,780, der deutschen Patentanmeldung Nr. 102016108247.3, der europäischen Patentanmeldung Nr. 13163677.1, der europäische Patentanmeldung Nr. 15173201.3 und dem europäisches Patent Nr. 1673260 beschrieben sind. Die Reinigungsvorrichtungen sind in ihrer Zusammensetzung nicht beschränkt und können beispielsweise beliebige Gewebe, Elastomere, Schwämme, Bürsten oder Kombinationen davon umfassen. Spezielle Wischerelemente, die Wischerarme, Wischerblätter, Wischtücher, Wischgewebe und Kombinationen davon umfassen, sind in der europäischen Patentanmeldung Nr. 14165197.6 beschrieben. Ein Wischerelement kann beispielsweise nach dem in der europäischen Patentanmeldung Nr. 130164250.6 beschriebenen Verfahren gesteuert werden. Ein Reservoir zum Halten einer Reinigungsflüssigkeit, wie in der europäischen Patentanmeldung Nr. 14165197.6 beschrieben, kann an dem Kameramodul angebracht oder in dieses integriert sein, um die Reinigungsflüssigkeit den optischen Elementen des Kameramoduls zuzuführen.

Verschiedene Verfahren können verwendet werden, um Schmutz oder andere Trübungen zu erkennen, die das Funktionieren des Kameramoduls verhindern oder verschlechtern, wie es im US-Patent Nr. 8,395,514, dem europäischen Patent Nr. 1328141, und dem US-Patent Nr. 8,031,224 beschrieben ist. Auch können Lichtquellen in das Kameramodul eingebaut oder integriert werden, um die Sichtbarkeit von umgebenden Objekten zu erhöhen, Distanzen und Richtungen zu messen und Schmutz zu erkennen, wie in dem US-Patent Nr. 8,031,224, der US-Patentanmeldung Nr. 62 / 470,658 und der US-Patentanmeldung Nr. 09 / 771,140 beschrieben.

Es ist bekannt, Heizvorrichtungen für solche Kameras bzw. Schutzgläser bereitzustellen. Hierzu werden beispielsweise Heizfolien auf das Schutzglas geklebt oder mit diesem laminiert. Eine derartige Lösung ist aufwendig in der Herstellung und besitzt aufgrund der geringen thermischen Masse einer solchen Heizfolie nur eine geringe Heizleistung. Verschiedene Heizmittel wie Heizspulen, in den Linsenhalter oder der Einfassung integrierte Heizvorrichtungen oder andere Heizelemente können verwendet werden, um Kondensation und Vereisung an der Oberfläche von optischen Elementen zu verhindern, wie beispielsweise in der deutschen Patentanmeldung Nr. 102016108247.3 und der US-Patentanmeldung Nr. 62 / 470,658.

Wasserdichte Abdichtungen gegen Witterungseinflüsse sowie gegen den Einfluss von Waschprozessen mit Waschmitteln, Lösungsmitteln und Hochdruckreinigern können am Gehäuse des Kameramoduls verwendet werden, wie zum Beispiel in der US-Patentanmeldung Nr. 13 / 090,127 beschrieben. Alternativ kann das Gehäuse aus einem Körper hergestellt sein, der aus Kunststoff und leitfähigem Material besteht, wobei das leitfähige Material in dem Kunststoffmaterial verteilt ist, um eine leitfähige Masse zu bilden, um einer Stromquelle, vorzugsweise einer Gleichspannungsquelle, zu ermöglichen, über mindestens zwei Elektroden mit dem Körper eine Verbindung einzugehen und den Körper entsprechend zu erwärmen. Eine leitende Bahn kann in Kunststoffteile des Kameramoduls eingebettet sein, wie in dem europäischen Patent Nr. 1328141 und dem US-Patent Nr. 7,083,311 beschrieben.

Das Kameramodul kann ein Energiesammelsystem umfassen, wie es beispielsweise in der europäischen Patentanmeldung Nr. 09171683.7 beschrieben ist. Ein Fehlererkennungssystem für elektrische Verbraucher, wie es in dem US-Patent Nr. 8,487,633 beschrieben ist, kann verwendet werden, um einen Ausfall des Kameramoduls zu detektieren.

Verschiedene Arten von Befestigungen können verwendet werden, um das Kameramodul an dem Fahrzeug oder anderen Komponenten zu befestigen, wie beispielsweise die Schnappverbindung, die in dem europäische Patent Nr. 2233360 beschrieben.

Es können verschiedene Steuerungsmittel und Analysiervorrichtungen verwendet werden, wie beispielsweise die Berechnungseinheiten, die in der US-Patentanmeldung Nr. 13 / 090,127, der deutschen Patentanmeldung Nr. 102016106126.3, der deutschen Patentanmeldung Nr. 102011053999, der europäischen Patentschrift Nr. 2146325 und dem US-Patent Nr. 8,849,104 beschrieben. Zusätzlich kann die HDR-Technologie (Hoher Dynamikumfang) gemäß der US-Patentanmeldung Nr. 14 / 830,40, verwendet werden.

In Rückblickvorrichtungen, wie beispielsweise Außenrückspiegeln von Kraftfahrzeug, werden somit zunehmend Hinweisleuchten verbaut, die einem Fahrer des Kraftfahrzeugs zusätzliche Informationen über den Fahrzustand und/oder das Verkehrsgeschehen liefern sollen. Hierbei kann es sich etwa um Warnleuchten für Fahrerassistenzsysteme handeln, die dem Fahrer anzeigen, dass sich im toten Winkel der Rückblickvorrichtung ein Fahrzeug befindet, oder dass ein Spurwechsel sicher bzw. nicht sicher durchführbar ist.

Eine derartige Leuchte ist zum Beispiel aus der DE 20 2012 013 353 U1 bekannt. Diese bekannte Leuchte umfasst eine Lichtquelle, eine Sammeloptik in Form eines Hohllichtleiters und eine Streuoptik.

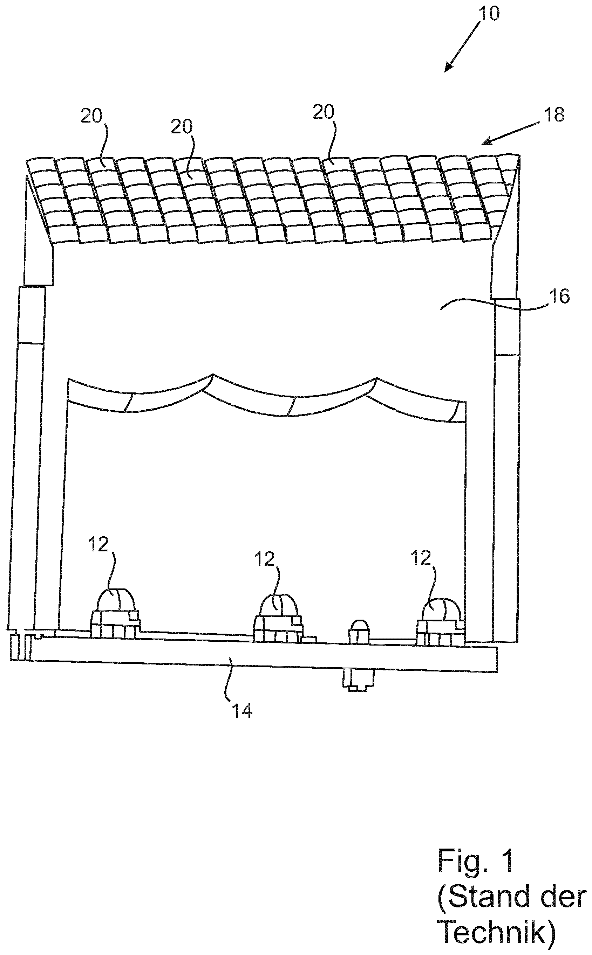

Eine im Ganzen mit 10 bezeichnete Leuchte, wie sie auch aus dem Stand der Technik bekannt und in Fig. 1 dargestellt ist, umfasst mehrere Leuchtmittel 12, die auf einer Platine 14 angeordnet sind. In dem in Fig. 1 gezeigten Beispiel wird das Licht der Leuchtmittel 12 durch eine Sammeloptik 16 kollimiert und auf eine Streuoptik 18 geleitet. Die Streuoptik 18 umfasst eine Mehrzahl von Streuelementen 20, die auf einer den Leuchtmitteln 12 abgewandten, planen Fläche der Sammeloptik 16 angeordnet sind.

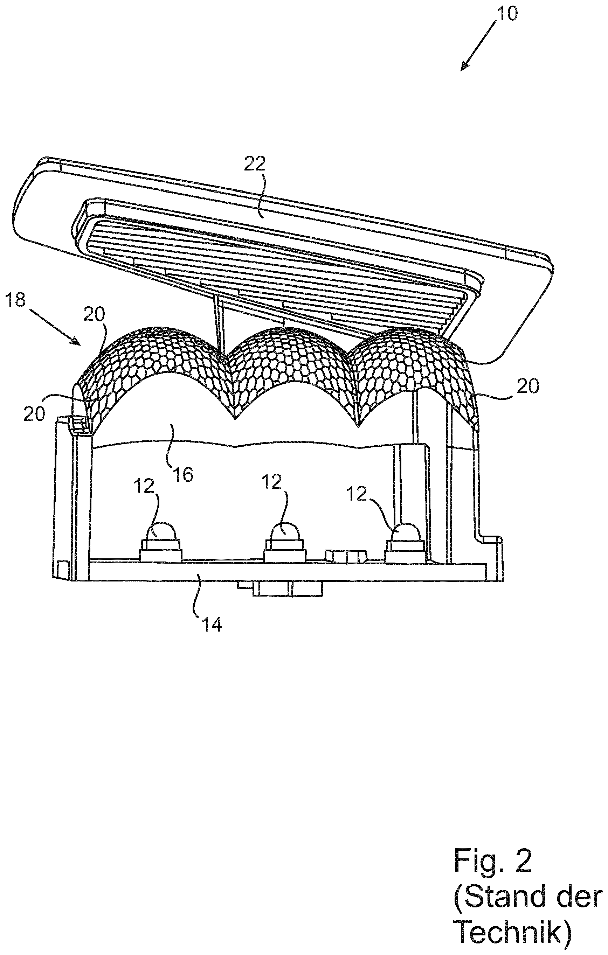

Alternativ ist es, wie in Fig. 2 dargestellt, aus dem Stand der Technik bekannt, als Sammeloptik 16 eine konkav-konvexe Linsenanordnung zu verwenden, wobei dort die Streuelemente 20 der Streuoptik 18 als hexagonale Elemente unmittelbar auf der konvexen Fläche der Sammeloptik 16 ausgebildet sind. Zusätzlich ist gemäß Fig. 2 eine Blende 22 vorgesehen, durch die das Licht zu einem Betrachter geleitet wird.

Derartige Leuchten 10 weisen nachteiliger Weise oft eine sehr inhomogene Leuchtdichteverteilung auf und strahlen das von den Leuchtmitteln 12 erzeugte Licht lediglich entlang einer Hauptabstrahlrichtung ab. Soll eine derartige Leuchte 10 somit als Anzeigeleuchte für eine Rückblickvorrichtung eines Kraftfahrzeugs verwendet werden, so sind unterschiedliche Auslegungen für Kraftfahrzeug mit rechtsseitiger Lenkung und Kraftfahrzeug mit linksseitiger Lenkung notwendig. Selbst hier kann nicht immer garantiert werden, dass die Leuchte 10 aus allen Betrachtungswinkeln bzw. Betrachtungspositionen eines Fahrers des Kraftfahrzeugs zuverlässig wahrgenommen werden kann.

Aus der EP 1 652 727 A1 ist ein Kraftfahrzeug mit einem Spurwechselassistenzsystem umfassend ein Steuergerät und eine in einem Außenspiegel oder einem außenspiegelnahen Innenbereich im Kraftfahrzeug integrierte, über das Steuergerät ansteuerbare Leuchtanzeigeeinrichtung, über die dem Fahrer bei Erfassen einer für einen Spurwechsel gefährlichen Situation ein Leuchtsignal gebbar ist, bekannt. Die unter einem sich zum Fahrer hin öffnenden, bezogen auf eine vorderst und hinterst und/oder unterst und oberst mögliche Sitzposition des Fahrers bestimmten Winkel abstrahlende Leuchtanzeigeeinrichtung emittiert dabei einen Lichtfächer, der in seiner Helligkeit von einer maximalen Helligkeit bezogen auf die vorderste Sitzposition und/oder die unterste Sitzposition des Fahrers zu einer minimalen Helligkeit bezogen auf die hinterste Sitzposition und/oder die oberste Sitzposition des Fahrers abnimmt. Ein großer oder erhöht in der obersten Sitzposition befindliche Fahrer sitzt relativ nah zum Fahrzeugdach, so dass er weniger Umgebungshimmel und mehr von der einfarbigen Straße und der Umgebung, als der unten sitzende Fahrer sieht, der mithin bei Sonnenschein wesentlich heller ausgeleuchtet als der große Fahrer in der obersten Position ist. Nach der Lehre der EP 1 652 727 A1 soll die abgegebene Lichtmenge umso größer sein soll, je niedriger der Fahrer sitzt bzw. je niedriger sein Kopf bzw. die Augen sind, so dass der kleine bzw. niedrig sitzende Fahrer bzw. sein Augpunkt ein sehr helles Leuchtsignal erhält, während der große, oben sitzende Fahrer bzw. sein Augpunkt ein deutlich schwächeres Leuchtsignal erhält. Dies wird mit den Lichtfächer erreicht.

Bei bekannten Leuchten besteht mithin weiterhin das Problem, dass üblicherweise für rechtsgelenkte und linksgelenkte Fahrzeuge unterschiedlich ausgelegte Leuchten verwendet werden müssen, um die Sichtbarkeit der Leuchte für den Fahrer zu gewährleisten. Zudem ergibt sich oft das Problem, dass die Leuchtdichte einer derartigen Leuchte über den gesamten möglichen Betrachtungswinkel hinweg nicht konstant ist, so dass sich ein ästhetisch nicht ansprechendes Erscheinungsbild ergibt, oder schlimmstenfalls bei einer extremen Kopfposition des Fahrers die Leuchte nicht korrekt wahrgenommen werden kann.

Es ist daher die Aufgabe der vorliegenden Erfindung, die gattungsgemäße Leuchte derart weiterzuentwickeln, dass sie die Nachteile des Stands der Technik überwindet. Insbesondere soll sie eine besonders homogene Leuchtdichte aufweisen und sowohl in rechtsgelenkten als auch in linksgelenkten Kraftfahrzeug ohne Veränderung einsetzbar sein.

Diese Aufgabe wird erfindungsgemäß gelöst durch die Merkmale des Kennzeichens von Anspruch 1.

Mithin liefert die Erfindung eine Leuchte für eine Rückblickvorrichtung eines Kraftfahrzeugs, mit zumindest einer Lichtquelle zum Aussenden von Lichtstrahlen, einer Sammeloptik zum Kollimieren der Lichtstrahlen und einer im Strahlengang der Lichtstrahlen der Sammeloptik nachgelagerten Streuoptik, die eine erste Hauptabstrahlrichtung, die in Einbaulage der Leuchte in einem linksgelenkten Kraftfahrzeug auf eine Aug-Ellipse eines Fahrers des Kraftfahrzeugs gerichtet ist, und eine zweite Hauptabstrahlrichtung, die in Einbaulage der Leuchte in einem rechtsgelenkten Kraftfahrzeug auf eine Aug-Ellipse eines Fahrers des Kraftfahrzeugs gerichtet ist, aufweist.

Die Aug-Ellipse beschreibt einen virtuellen Flächenbereich, in welchem die Augenposition eines Fahrers des Kraftfahrzeugs statistisch zu erwarten ist. Die Augenposition hängt dabei im Wesentlichen von der Größe bzw. von der Beinlänge des Fahrers ab. Üblicherweise wird die Aug-Ellipse so definiert, dass sie alle Augenpositionen für mögliche Fahrer im 95%-Perzentil der Größenverteilung über alle Fahrer umfasst.

Durch die erfindungsgemäße Ausbildung der Leuchte wird es ermöglicht, identische Leuchten in rechtsgelenkten und linksgelenkten Kraftfahrzeug zu verbauen. Hierdurch entfallen Zusatzkosten, die durch die Entwicklung spezifisch angepasster Leuchten für die beiden unterschiedlichen Kraftfahrzeugtypen sowie durch die Bereitstellung von unterschiedlichen Werkzeugen anfallen würden. Eine solche Leuchte ist daher besonders kostengünstig in ihrer Herstellung und Entwicklung. Ferner wird durch die Streuoptik eine besonders homogene Lichtverteilung erreicht, so dass sichergestellt ist, dass die Leuchte für den Fahrer immer zuverlässig zu erkennen ist.

Bei einer bevorzugten Ausführungsform der Erfindung umfasst die Streuoptik eine Mehrzahl von kissenförmigen Streuelementen. Diese können alternativ auch prismenförmig ausgebildet sein. Hierdurch wird eine besonders homogene Lichtverteilung über die Fläche der Streuoptik erzielt.

Bei einer weiteren bevorzugten Ausführungsform der Erfindung weisen die kissenförmigen Streuelemente eine Kantenlänge von weniger als 1 mm, insbesondere von weniger als 0.2 mm, auf. Im üblichen Betrachtungsabstand zu einer derartigen Leuchte sind somit die individuellen Streuelemente nicht als solche zu erkennen, die Streuoptik wird vielmehr als homogene leuchtende Fläche wahrgenommen, was zu einer besonders guten Sichtbarkeit und ästhetischen Anmutung führt.

Bei einer weiteren bevorzugten Ausführungsform der Erfindung weisen die kissenförmigen Streuelemente einen in Einbaulage der Leuchte horizontalen Radius von 0,9 mm bis 1 mm und/oder einen in Einbaulage der Leuchte vertikalen Radius von 1 mm bis 1,2 mm auf. Dies ermöglicht eine besonders feine Anpassung der Abstrahlgeometrie, so dass die gewünschten Hauptabstrahlrichtungen problemlos verwirklicht werden können.

Bei einer weiteren bevorzugten Ausführungsform der Erfindung bildet die Streuoptik in der ersten und zweiten Hauptabstrahlrichtung ein Symbol, ein Logo, einen Hinweis und/oder eine Warnung aus. Dies kann durch die Anordnung der individuellen Streuelemente erreicht werden. Es ist jedoch auch die Verwendung einer Maske oder dergleichen möglich. Hierdurch können spezifische Informationen an den Fahrer des Kraftfahrzeugs übermittelt werden, so dass beispielsweise unterschiedliche Symbole angezeigt werden können, wenn ein Spurwechselvorgang oder Überholvorgang möglich oder nicht möglich ist.

Bei einer weiteren bevorzugten Ausführungsform der Erfindung weist die Sammeloptik zumindest eine TIR-(total internal reflection)-Linse, eine spiegelnde Paraboloid-Oberfläche, einen paraboloiden Reflektor, eine Fresnel-Linse und/oder eine Sammellinse auf. Die Sammellinse kann dabei konkav-konvex oder auch plan-konvex ausgebildet sein. Wesentlich ist lediglich, dass durch die Sammeloptik das von der zumindest einen Lichtquelle bereitgestellte Licht homogen kollimiert und auf die Streuoptik geleitet wird.

Bei einer weiteren bevorzugten Ausführungsform der Erfindung ist eine Brennweite der Sammeloptik gleich zu einem Abstand zwischen der Sammeloptik und der zumindest einen Lichtquelle. Auf diese Weise wird eine besonders gute und homogene Weiterleitung des von der zumindest einen Lichtquelle ausgestrahlten Lichts auf die Streuoptik erzielt.

Bei einer weiteren bevorzugten Ausführungsform der Erfindung beträgt ein Abstand zwischen der Sammeloptik und der zumindest einen Lichtquelle 15 mm bis 30 mm, bevorzugt 22 mm. Hierdurch wird eine besonders kompakte Leuchte verwirklicht, die auch im beschränkten Bauraum im Inneren einer Rückblickvorrichtung, beispielsweise eines Außenspiegels, problemlos untergebracht werden kann.

Bei einer weiteren bevorzugten Ausführungsform der Erfindung ist die zumindest eine Lichtquelle als Leuchtdiode ausgebildet. Durch eine Leuchtdiode wird eine besonders gute Lichtausbeute bei geringem Stromverbrauch und geringer Abwärme ermöglicht.

Bei einer weiteren bevorzugten Ausführungsform der Erfindung ist die zumindest eine Lichtquelle auf einer Platine angeordnet, die mechanisch mit der Sammeloptik, insbesondere über zumindest ein Rahmenelement, verbunden ist. Hierdurch wird die Ausrichtung der Sammeloptik zu der zumindest einen Lichtquelle besonders einfach stabil eingestellt, so dass besonders geringe Toleranzen auftreten.

Das Rahmenelement kann von der Sammeloptik oder als separates Bauteil, vorzugsweise mit einer Befestigungseinrichtung, insbesondere umfassend zumindest ein Klipselement, bereitgestellt sein.

Bei einer weiteren bevorzugten Ausführungsform der Erfindung sind die Streuoptik und die Sammeloptik als separate Bauteile ausgebildet. Dies ermöglicht eine besonders hohe Flexibilität in der Fertigung und Gestaltung der Leuchte.

Bei einer weiteren bevorzugten Ausführungsform der Erfindung sind die Streuoptik und/oder die Sammeloptik als Spritzgussbauteil oder Spritzprägebauteil ausgebildet, wobei eine Entformungsrichtung des Spritzgussbauteils oder des Spritzprägebauteils einer optischen Achse der Streuoptik bzw. der Sammeloptik entspricht. Auf diese Weise wird eine besonders gute optische Qualität der Streuoptik und/oder der Sammeloptik erzielt und gleichzeitig die Fertigung der jeweiligen Bauteile vereinfacht.

Es ist bevorzugt, dass die erste Hauptabstrahlrichtung auf der einen Seite der optischen Achse und die zweite Hauptabstrahlrichtung auf der anderen Seite der optischen Achse verläuft.

Die Erfindung betrifft ferner eine Rückblickvorrichtung mit zumindest einem Spiegelelement und/oder einer Kamera sowie auch zumindest einer erfindungsgemäßen Leuchte. Die Leuchte kann dabei innerhalb eines Gehäuses der Rückblickvorrichtung und/oder an dem Spiegelelement positioniert sein.

Zudem betrifft die Erfindung betrifft ein Kraftfahrzeug mit zumindest einer Leuchte der beschriebenen Art. Das Gehäuse, das Spiegelelement, die Kamera und/oder die Leuchte kann bzw. können dabei relativ zu dem Kraftfahrzeug bewegbar sein.

Auch bei der Rückblickvorrichtung und dem Kraftfahrzeug kommen die oben beschriebenen Vorteile der erfindungsgemäßen Leuchte zum Tragen.

Im Folgenden werden die Erfindung und ihre Ausführungsformen anhand der Zeichnung näher erläutert. Dabei zeigt:
- Fig. 1: eine schematische Darstellung einer Leuchte gemäß eines Ausführungsbeispiels nach dem Stand der Technik;
- Fig. 2: eine schematische Darstellung einer Leuchte gemäß eines alternativen Ausführungsbeispiels nach dem Stand der Technik;
- Fig. 3: eine perspektivische Ansicht einer Leuchte gemäß eines ersten Ausführungsbeispiels der Erfindung;
- Fig. 4: eine perspektivische Ansicht einer Leuchte gemäß eines zweiten Ausführungsbeispiels der Erfindung;
- Fig. 5: eine weitere perspektivische Ansicht der Leuchte von Fig. 4;
- Fig. 6: eine perspektivische Ansicht einer Leuchte gemäß eines dritten Ausführungsbeispiels der Erfindung;
- Fig. 7: eine schematische Darstellung der Hauptabstrahlrichtungen einer Leuchte gemäß eines vierten Ausführungsbeispiels der Erfindung; und
- Fig. 8: eine schematische Darstellung der Hauptabstrahlrichtungen der Leuchte von Fig. 7 in ihrer Einbaulage in einem Kraftfahrzeug.

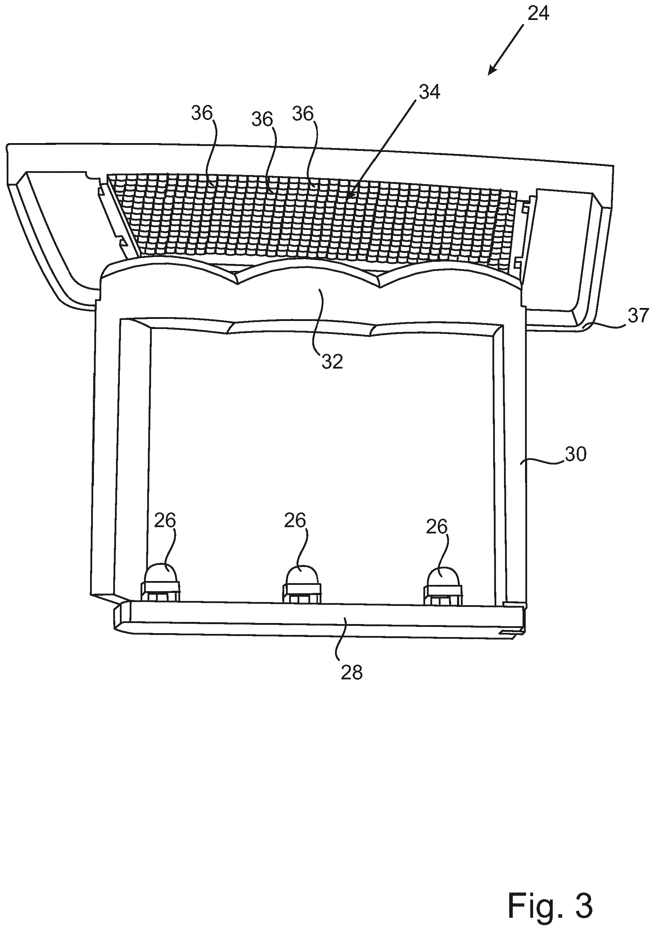

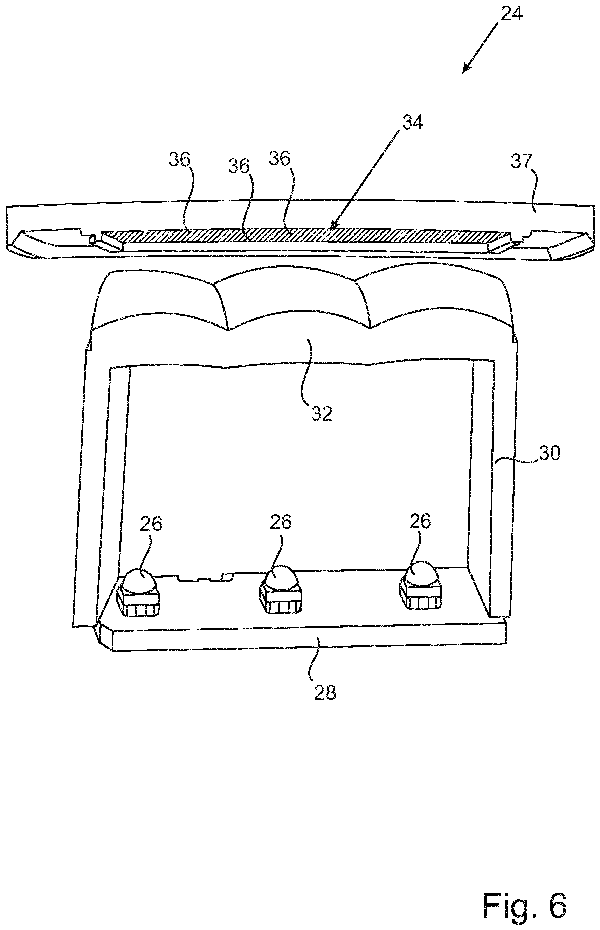

Verschiedene Ausführungsbeispiele einer erfindungsgemäßen Leuchte 24 sind in den Figuren 3 bis 6 dargestellt. Auch bei diesen ist, wie bereits bei den mit Bezug auf die Figuren 1 und 2 beschriebenen, bekannten Leuchten 10, eine Mehrzahl von Leuchtmitteln 26 auf einer Platine 28 vorgesehen. Die Leuchtmittel 26 sind dabei vorzugsweise als Leuchtdioden ausgebildet. Über ein Rahmenelement 30 ist eine Sammeloptik 32 mit der Platine 28 verbunden. In allen gezeigten Ausführungsbeispielen umfasst die Sammeloptik 32 konkav-konvexe kollimierende Linsen. Es ist dabei jedoch alternativ auch möglich, als Sammeloptik 32 total reflektierende Linsen, Fresnel-Linsen oder paraboloide Reflektorelemente zu verwenden.

Im Gegensatz zum Stand der Technik ist vorliegend eine Streuoptik 34 als separates, zur Sammeloptik 32 beabstandetes Element vorgesehen. Die Streuoptik 34 umfasst eine Mehrzahl von kissenförmigen Streuelementen 36, die von einem weiteren Rahmen 37 gehalten werden.

Die kissenförmigen Streuelemente 36 weisen vorzugsweise eine Kantenlänge von weniger als 1 mm auf und besitzen einen in Einbaulage der Leuchte 24 horizontalen Radius von 0,9 bis 1 mm und/oder einen in Einbaulage der Leuchte vertikalen Radius von 1 mm bis 1,2 mm.

Hierdurch kann zunächst eine besonders homogene Leuchtdichteverteilung über die gesamte Fläche der Streuoptik 34 erzielt werden.

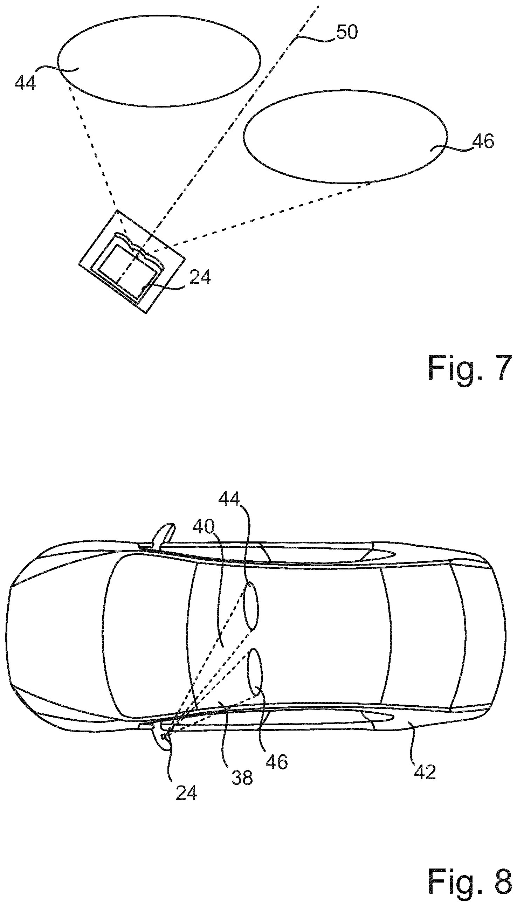

Ferner können die Streuelemente 36 so angeordnet werden, dass die Leuchte 24 zwei Hauptabstrahlrichtungen 38, 40 aufweist, die in einer Einbaulage der Leuchte 24 in einem Kraftfahrzeug 42, wie in den Figuren 7 und 8 zu erkennen, auf die Fahrerseite bzw. die Beifahrerseite des Kraftfahrzeugs 42 gerichtet sind. Die beiden unterschiedlichen Hauptabstrahlrichtungen können durch die Anordnung der individuellen Streuelemente erreicht werden. Damit wird von der Abstrahlgeometrie der Leuchte 24 sowohl die Aug-Ellipse 44 eines Fahrers in einem linksgelenkten Fahrzeug, als auch die Aug-Ellipse 46 eines Fahrers in einem rechtsgelenkten Fahrzeug erfasst. Mit anderen Worten kann die gleiche erfindungsgemäße Leuchte 24 sowohl in einem linksgelenkten als auch in einem rechtsgelenkten Fahrzeug verbaut werden, ohne dass konstruktive Abänderungen notwendig sind. Dies reduziert den Entwicklungs- und Fertigungsaufwand für derartige Leuchten. Hierbei besitzt die Leuchte 24 eine optische Achse 50, wobei die erste Hauptabstrahlrichtung 38 auf der einen Seite der optischen Achse 50 zur Aug-Ellipse 46 des Fahrers in einem rechtsgelenkten Fahrzeug und die zweite Hauptabstrahlrichtung 40 auf der anderen Seite der optischen Achse 50 zur Aug-Ellipse 44 des Fahrers in einem rechtsgelenkten Fahrzeug verläuft. Die optische Achse der Leuchte 24 ist durch die Eigenschaften der Leuchte 24 definiert.

Fig. 8 veranschaulicht die Abstrahlgeometrie einer Leuchte 24, die bezüglich eines linksgelenkten Kraftfahrzeugs 42 auf der Fahrerseite angebracht ist. Für eine Leuchte 24, die auf der Beifahrerseite des Kraftfahrzeugs 42 angebracht werden soll, muss lediglich eine spiegelsymmetrische Geometrie der Streuoptik 34 vorgesehen werden.

Durch Masken oder auch durch die Anordnung der Streuelemente 36 kann die Streuoptik 34 so angepasst werden, dass bei Aktivierung der Leuchtmittel 26 ein bestimmtes Symbol oder Logo für den Fahrer des Kraftfahrzeugs sichtbar wird. Dies kann beispielsweise zur Darstellung von Totwinkel- oder Spurwechselwarnungen genutzt werden.

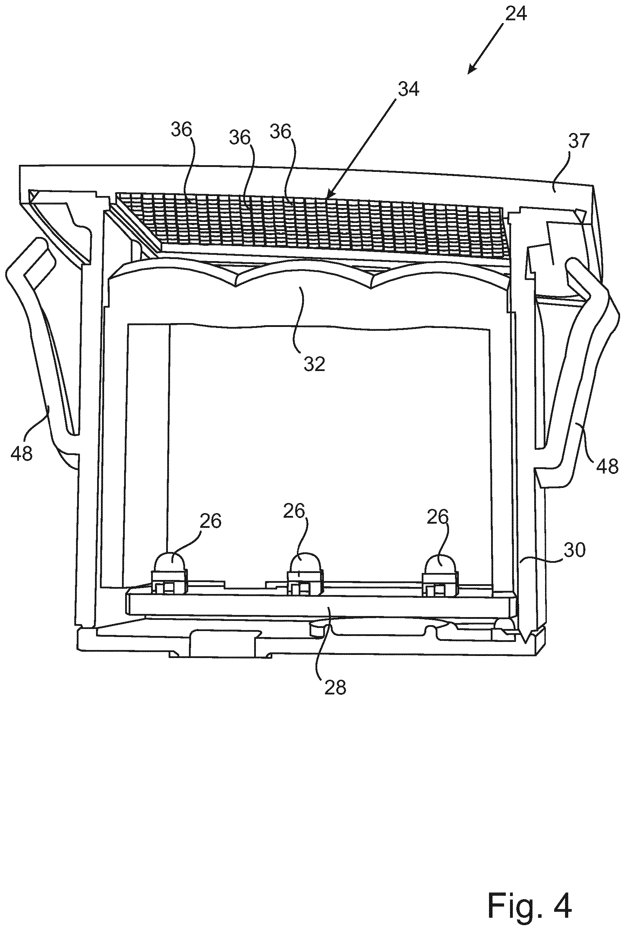

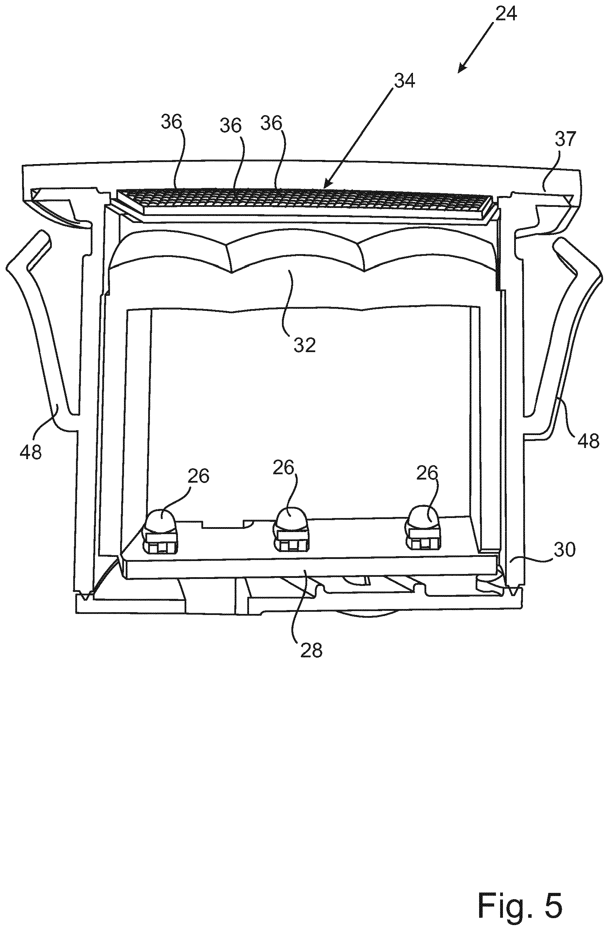

Bei dem Ausführungsbeispiel der Figur 3 ist das Rahmenelement 30 in einem mit der Sammeloptik 32 nach Art einer TIR-Linse ausgebildet. Wie in den Figuren 4 und 5 dargestellt, kann das Rahmenelement 30 der Leuchte 24 auch als zusätzliches Bauteil, also getrennt von der Sammeloptik 32 bereitgestellt werden und noch Klipselemente 48 umfassen, die einen besonders einfachen Einbau der Leuchte 24 in eine Rückblickvorrichtung eines Kraftfahrzeugs ermöglichen.

Die Sammeloptik 32 und/oder die Streuoptik 34 sind bevorzugt als Spritzguss- oder Spritzprägebauteile ausgebildet. Dann ist es vorteilhaft, wenn die Entformungsrichtung des jeweiligen Bauteils dessen optischer Achse 50 entspricht. Die optische Achse 50 der Leuchte 24 ist Figur 7 entnehmbar.

Insgesamt wird so eine Leuchte 24 erhalten, die sowohl eine besonders hohe und homogene Leuchtdichte bereitstellt, als auch problemlos ohne konstruktive Änderung in linksgelenkten und rechtsgelenkten Kraftfahrzeug verbaut werden kann.

Die in der voranstehenden Beschreibung, in den Zeichnungen sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 10: Leuchte
- 12: Leuchtmittel
- 14: Platine
- 16: Sammeloptik
- 18: Streuoptik
- 20: Streuelement
- 22: Blende
- 24: Leuchte
- 26: Leuchtmittel
- 28: Platine
- 30: Rahmenelement
- 32: Sammeloptik
- 34: Streuoptik
- 36: Streuelement
- 37: Rahmenelement
- 38: Hauptabstrahlrichtung
- 40: Hauptabstrahlrichtung
- 42: Kraftfahrzeug
- 44: Aug-Ellipse
- 46: Aug-Ellipse
- 48: Klipselement
- 50: Optische Achse

## Patentansprüche

1. Leuchte (24) für eine Rückblickvorrichtung eines Kraftfahrzeugs (42), mit zumindest einer Lichtquelle (26) zum Aussenden von Lichtstrahlen, einer Sammeloptik (32) zum Kollimieren der Lichtstrahlen und einer im Strahlengang der Lichtstrahlen der Sammeloptik (32) nachgelagerten Streuoptik (34), die eine erste Hauptabstrahlrichtung (38), die in Einbaulage der Leuchte (24) in einem linksgelenkten Kraftfahrzeug (42) auf eine Aug-Ellipse (46) eines Fahrers des Kraftfahrzeugs (42) gerichtet ist, aufweist,
**dadurch gekennzeichnet, dass**
die Streuoptik (34) auch eine zweite Hauptabstrahlrichtung (40), die in Einbaulage der Leuchte (24) in einem rechtsgelenkten Kraftfahrzeug (42) auf eine Aug-Ellipse (44) eines Fahrers des Kraftfahrzeugs (42) gerichtet ist, aufweist,
wobei jede Aug-Ellipse (44, 46) einen virtuellen Flächenbereich beschreibt, in welchem eine Augenposition des Fahrers des Kraftfahrzeugs statistisch zu erwarten ist,
wobei die Leuchte (24) eine optische Achse besitzt, und
wobei die erste Hauptabstrahlrichtung (38) auf der einen Seite der optischen Achse (50) und die zweite Hauptabstrahlrichtung (40) auf der anderen Seite der optischen Achse (50) verläuft.

2. Leuchte (24) nach Anspruch 1, **dadurch gekennzeichnet, dass**
die Streuoptik (34) eine Mehrzahl von kissenförmigen Streuelementen (36) aufweist, die
vorzugsweise eine Kantenlänge von weniger als 1 mm, insbesondere von weniger als 0.2 mm, und/oder einen in Einbaulage horizontalen Radius von 0,9 mm bis 1 mm und/oder einen in Einbaulage vertikalen Radius von 1 mm bis 1,2 mm aufweisen.

3. Leuchte (24) nach Anspruch 1 oder 2, **dadurch gekennzeichnet, dass**
die Streuoptik (34) in der ersten (38) und zweiten Hauptabstrahlrichtung (40) ein Symbol, ein Logo, einen Hinweis und/oder eine Warnung ausbildet.

4. Leuchte (24) nach einem der vorhergehenden Ansprüche, **dadurch gekennzeichnet, dass**
die Sammeloptik (32) zumindest eine TIR-(total internal reflection)-Linse, eine spiegelnde Paraboloid-Oberfläche, einen paraboloiden Reflektor, eine Fresnel-Linse und/oder eine Sammellinse aufweist, wobei die Sammellinse vorzugsweise konkav-konvex oder plan-konvex ausgebildet ist.

5. Leuchte (24) nach einem der vorhergehenden Ansprüche, **dadurch gekennzeichnet, dass**
eine Brennweite der Sammeloptik (32) einem Abstand zwischen der Sammeloptik (32) und der zumindest einen Lichtquelle (26) entspricht, und/oder ein Abstand zwischen der Sammeloptik (32) und der zumindest einen Lichtquelle (26) 15 mm bis 30 mm, bevorzugt 22 mm, beträgt.

6. Leuchte (24) nach einem der vorhergehenden Ansprüche, **dadurch gekennzeichnet, dass**
die zumindest eine Lichtquelle (26) als Leuchtdiode ausgebildet und/oder auf einer Platine (28) angeordnet ist, die vorzugsweise mechanisch mit der Sammeloptik (32) verbunden ist, insbesondere über zumindest ein Rahmenelement (30).

7. Leuchte (24) nach Anspruch 6, **dadurch gekennzeichnet, dass**
das Rahmenelement (30) von der Sammeloptik (32) oder als separates Bauteil, vorzugsweise mit einer Befestigungseinrichtung, insbesondere umfassend zumindest ein Klipselement (48), bereitgestellt ist.

8. Leuchte (24) nach einem der vorhergehenden Ansprüche, **dadurch gekennzeichnet, dass**
die Streuoptik (34) und die Sammeloptik (32) als separate Bauteile ausgebildet sind.

9. Leuchte (24) nach einem der vorhergehenden Ansprüche, **dadurch gekennzeichnet, dass**
die Streuoptik (34) und/oder die Sammeloptik (32) als Spritzgussbauteil oder Spritzprägebauteil ausgebildet sind, wobei eine Entformungsrichtung des Spritzgussbauteils oder des Spritzprägebauteils der optischen Achse (50) der Streuoptik (34) bzw. der Sammeloptik (32) entspricht.

10. Rückblickvorrichtung eines Kraftfahrzeugs (42) mit zumindest einem Spiegelelement und/oder einer Kamera und zumindest einer Leuchte (24) nach einem der vorhergehenden Ansprüche.

11. Rückblickvorrichtung nach Anspruch 10, **dadurch gekennzeichnet, dass**
die Leuchte (24) innerhalb eines Gehäuses der Rückblickvorrichtung und/oder an dem Spiegelelement positioniert ist.

12. Kraftfahrzeug (42) mit zumindest einer Leuchte (24) nach einem der Ansprüche 1 bis 9 oder zumindest einer Rückblickvorrichtung nach Anspruch 10 oder 11.

13. Kraftfahrzeug (42) nach Anspruch 12, **dadurch gekennzeichnet, dass**
das Gehäuse, das Spiegelelement, die Kamera und/oder die Leuchte (24) relativ zu dem Kraftfahrzeug (42) bewegbar ist.

## Claims

1. A lamp (24) for a rear-view device of a motor vehicle (42), comprising at least one light source (26) for emitting light beams, collection optics (32) for collimating the light beams, and scattering optics (34) which are arranged downstream of the collection optics (32) in the beam path of the light beams, and having a first main emission direction (38), which is directed towards an eye ellipse (46) of a driver of the motor vehicle (42) when the lamp (24) is installed in a left-hand-drive motor vehicle (42),
**characterized in that**
the scattering optics (34) also have a second main emission direction (40), which is directed towards an eye ellipse (44) of a driver of the motor vehicle (42) when the lamp (24) is installed in a right-hand-drive motor vehicle (42),
each eye ellipse (44, 46) describing a virtual surface area in which an eye position of the driver of the motor vehicle can be statistically expected,
the lamp (24) having an optical axis, and
the first main emission direction (38) extending on one side of the optical axis (50) and the second main emission direction (40) extending on the other side of the optical axis (50).

2. The lamp (24) according to Claim 1, **characterized in that**
the scattering optics (34) have a plurality of cushion-shaped scattering elements (36), which preferably have an edge length of less than 1 mm, in particular of less than 0.2 mm, and/or a horizontal radius of from 0.9 mm to 1 mm when installed and/or a vertical radius of from 1 mm to 1.2 mm when installed.

3. The lamp (24) according to Claim 1 or 2, **characterized in that**
the scattering optics (34) form a symbol, a logo, a notice and/or a warning in the first (38) and the second main emission direction (40).

4. The lamp (24) according to any of the preceding claims, **characterized in that**
the collection optics (32) comprise at least one TIR (total internal reflection) lens, a specular paraboloid surface, a paraboloid reflector, a Fresnel lens and/or a collecting lens, the collecting lens preferably being concave-convex or plano-convex.

5. The lamp (24) according to any of the preceding claims, **characterized in that**
a focal length of the collection optics (32) corresponds to a distance between the collection optics (32) and the at least one light source (26), and/or a distance between the collection optics (32) and the at least one light source (26) is from 15 mm to 30 mm, preferably 22 mm.

6. The lamp (24) according to any of the preceding claims, **characterized in that**
the at least one light source (26) is designed as a light-emitting diode and/or is arranged on a circuit board (28), which is preferably mechanically connected to the collection optics (32), in particular via at least one frame element (30).

7. The lamp (24) according to Claim 6, **characterized in that**
the frame element (30) is provided by the collection optics (32) or as a separate component, preferably with a fastening apparatus, in particular having at least one clip element (48).

8. The lamp (24) according to any of the preceding claims, **characterized in that**
the scattering optics (34) and the collection optics (32) are formed as separate components.

9. The lamp (24) according to any of the preceding claims, **characterized in that**
the scattering optics (34) and/or the collection optics (32) are designed as an injection-molded component or an injection-stamped component, a demolding direction of the injection-molded component or the injection-stamped component corresponding to the optical axis (50) of the scattering optics (34) or the collection optics (32).

10. A rear-view device of a motor vehicle (42), comprising at least one mirror element and/or a camera, and at least one lamp (24) according to any of the preceding claims.

11. The rear-view device according to Claim 10, **characterized in that**
the lamp (24) is positioned within a housing of the rear-view device and/or on the mirror element.

12. A motor vehicle (42) comprising at least one lamp (24) according to any of Claims 1 to 9 or at least one rear-view device according to Claim 10 or 11.

13. The motor vehicle (42) according to Claim 12, **characterized in that**
the housing, the mirror element, the camera and/or the lamp (24) are movable relative to the motor vehicle (42).

## Revendications

1. Lampe (24) destinée au dispositif rétroviseur d'un véhicule (42), avec au moins une source de lumière (26) servant à émettre des faisceaux lumineux, une optique convergente (32) servant à collimater les faisceaux lumineux et une optique divergente (34) située en aval sur le parcours des faisceaux lumineux de l'optique convergente (32), qui présente une première direction principale de rayonnement (38), qui est ajustée sur une ellipse (46) balayée par l'œil d'un conducteur du véhicule (42) dans la position de montage de la lampe (24) à l'intérieur d'un véhicule conduit à gauche (42),
**caractérisée en ce que**
l'optique divergente (34) présente aussi une seconde direction principale de rayonnement (40), qui est ajustée sur une ellipse (44) balayée par l'œil d'un conducteur du véhicule (42) dans la position de montage de la lampe (24) à l'intérieur d'un véhicule conduit à droite (42),
dans laquelle chaque ellipse (44, 46) balayée par l'œil décrit une zone de surface virtuelle, à l'intérieur de laquelle le conducteur de véhicule est susceptible statistiquement de positionner son oeil,
dans laquelle la lampe (24) possède un axe optique et dans laquelle la première direction principale de rayonnement (38) passe par un côté de l'axe optique (50) et la seconde direction principale de rayonnement (40) par l'autre côté de l'axe optique (50).

2. Lampe (24) selon la revendication 1, **caractérisée en ce que**
l'optique divergente (34) comporte de multiples éléments divergents en forme de coussin (36), qui présentent de préférence une longueur d'arête de moins de 1 mm, en particulier de moins de 0,2 mm, et / ou un rayon horizontal en position de montage de 0,9 mm à 1 mm et / ou un rayon vertical en position de montage de 1 m à 1,2 mm.

3. Lampe (24) selon la revendication 1 ou 2, **caractérisée en ce que**
l'optique divergente (34) constitue un symbole, un logo, une instruction et / ou un avertissement dans la première (38) et la seconde direction principale de rayonnement (40).

4. Lampe (24) selon l'une quelconque des revendications précédentes, **caractérisée en ce que**
l'optique convergente (32) présente au moins une lentille RTI (à réflexion totale interne), une surface paraboloïde réfléchissante, un réflecteur paraboloïde, une lentille de Fresnel et / ou une lentille convergente, dans laquelle la lentille convergente est conçue de préférence selon un profil concave-convexe ou plan-convexe.

5. Lampe (24) selon l'une quelconque des revendications précédentes, **caractérisée en ce**
**qu'**une focale de l'optique convergente (32) correspond à une distance entre l'optique convergente (32) et ladite source de lumière (26) au moins, et / ou une distance entre l'optique convergente (32) et ladite source de lumière (26) au moins est de 15 mm à 30 mm, de préférence de 22 mm.

6. Lampe (24) selon l'une quelconque des revendications précédentes, **caractérisée en ce que**
ladite source de lumière (26) au moins est conçue sous la forme d'une diode électroluminescente et / ou est disposée sur une platine (28), qui est reliée de préférence mécaniquement à l'optique convergente (32), en particulier moyennant au moins un élément d'encadrement (30).

7. Lampe (24) selon la revendication 6, **caractérisée en ce que**
l'élément d'encadrement (30) est fourni par l'optique convergente (32) ou comme composant séparé, de préférence avec un dispositif de fixation, en particulier comprenant au moins un élément à clipser (48).

8. Lampe (24) selon l'une quelconque des revendications précédentes, **caractérisée en ce que**
l'optique divergente (34) et l'optique convergente (32) sont conçues sous la forme de composants séparés.

9. Lampe (24) selon l'une quelconque des revendications précédentes, **caractérisée en ce que**
l'optique divergente (34) et / ou l'optique convergente (32) sont conçues sous la forme d'un composant moulé par injection ou d'un composant moulé par injection-compression, dans laquelle une direction de démoulage du composant moulé par injection ou du composant moulé par injection-compression correspond à l'axe optique (50) de l'optique divergente (34) ou de l'optique convergente (32).

10. Dispositif rétroviseur d'un véhicule (42) avec au moins un élément de miroir et / ou une caméra et au moins une lampe (24) selon l'une quelconque des revendications précédentes.

11. Dispositif rétroviseur selon la revendication 10, **caractérisé en ce que**
la lampe (24) est positionnée à l'intérieur d'un boîtier du dispositif rétroviseur et / ou sur l'élément de miroir.

12. Véhicule (42) avec au moins une lampe (24) selon l'une des revendications 1 à 9 ou au moins un dispositif rétroviseur selon la revendication 10 ou 11.

13. Véhicule (42) selon la revendication 12, **caractérisé en ce que**
le boîtier, l'élément de miroir, la caméra et / ou la lampe (24) sont déplaçables par rapport au véhicule (42).
